# EUROPEAN PATENT APPLICATION

(11) **EP 2 592 582 A1**
(43) Date of publication of application: **15.05.2013**
(21) Application number: 12168173.8
(22) Date of filing: 16.05.2012
(51) Int. Cl.: G06K 9/32

(54) **Image processing apparatus and control method capable of providing character information**

(30) Priority: 08.11.2011 KR 20110115628
(71) Applicant: Samsung Electronics Co., Ltd., Suwon-si, Gyeonggi-do, 443-742 (KR)
(72) Inventor: Kweon, Yong-jae, Gyeonggi-do (KR)
(74) Representative: Hewett, Jonathan Michael Richard

(57) **Abstract**

An image processing apparatus and control method capable of providing character information are disclosed. The apparatus includes a signal receiving unit which receives an image signal; an image processing unit which processes the received image signal so that an image based on the image signal can be displayed; a searching unit which searches search words; and a controller which controls the searching unit to search at least one of the search words included in the displayed image and provide a user with a result of the search for the search word. With this configuration, users can more conveniently search character information included in contents being watched.

## Description

The present invention relates to an image processing apparatus which is capable of providing character information, and a control method.

An image processing apparatus such as a television (TV) can include contents which provide character information, such as broadcasting programs. However, in response to a user with a conventional image processing apparatus attempting to search for character information while viewing contents there arises a problem of inputting characters of information to be searched, one by one, using an input device such as a remote controller.

Accordingly, one or more exemplary embodiments of the present invention provide an image processing apparatus and control method which are capable of more conveniently searching character information included in contents being viewed by a user.

The foregoing and/or other aspects may be achieved by providing an image processing apparatus including: a signal receiving unit which receives an image signal; an image processing unit which processes the received image signal for displaying an image based on the received image signal; a searching unit which searches search words; and a controller which controls the searching unit to search at least one of the search words included in the displayed image and provide a user with a result of the search for the search word.

The image processing apparatus may further include a recognition unit which performs character recognition on the image, and the controller may determine the search word based on a result of the character recognition.

The image processing apparatus may further include a user input unit which receives a user instruction, and the controller may designate an area in the image according to the user instruction and controls the recognition unit to perform the character recognition in the designated area.

The image processing apparatus may further include a user input unit which receives a user instruction, and the controller may provide one or more candidate search words and control the searching unit to search one candidate search word which has been selected from among the one or more search word candidates which have been provided according to the user instruction.

The result of the search of the search word may include at least one of a broadcasting program, video contents, audio contents, data information and an application program.

The foregoing and/or other aspects may be achieved by providing a control method of an image processing apparatus, including receiving an image signal; processing the received image signal so that an image based on the image signal can be displayed; searching at least one search word from among a plurality of search words included in the displayed image; and providing a user with a result of the search of the search word.

The searching may include performing character recognition of the image, and determining the search word based on a result of the character recognition.

The performing character recognition may include receiving a user instruction; designating an area in the image according to the user instruction; and performing the character recognition in the designated area.

The searching may include: providing one or more candidates of search words; receiving a user instruction, and searching one selected search word from among the one or more provided search word candidates according to the user instruction.

The result of the search for the search word may include at least one of a broadcasting program, video contents, audio contents, data information and an application program.

An exemplary embodiment of the invention may further include an image processing apparatus including an image processing unit which processes a received image signal including search words; a searching unit which searches search words included with the image; and a controller which controls the searching unit to search at least one of the search words included in the displayed image and provide a user with a result of the search for the search word.

Another exemplary embodiment of the invention may further include a control method of an image processing apparatus, including receiving an image signal containing plural search words; processing the received image signal; searching at least one of plural search words included in the displayed image; and providing a user with a result of the search of the search word.

The above and/or other aspects will become apparent and more readily appreciated from the following description of the exemplary embodiments, taken in conjunction with the accompanying drawings, in which:
FIG. 1 is a view showing environments in which an image processing apparatus according to an exemplary embodiment of the present invention is applied;
FIG. 2 is a block diagram showing an exemplary configuration of the image processing apparatus shown in FIG. 1;
FIG. 3 is a flow chart showing a control method of the image processing apparatus shown in FIG. 1;
FIG. 4 shows an image of contents displayed by the image processing apparatus shown in FIG. 1, and an example of character information;
FIG. 5 is a flow chart showing an example of a search word determining process of the image processing apparatus shown in FIG. 1 to determine a search word;
FIG. 6 is a flow chart showing another example of a process of the image processing apparatus shown in FIG. 1 to determine a search word; and
FIG. 7 shows an image provided with candidate search words according to an exemplary embodiment.

Below, exemplary embodiments will be described in detail with reference to accompanying drawings so as to be easily understood by a person having ordinary skill in the art.

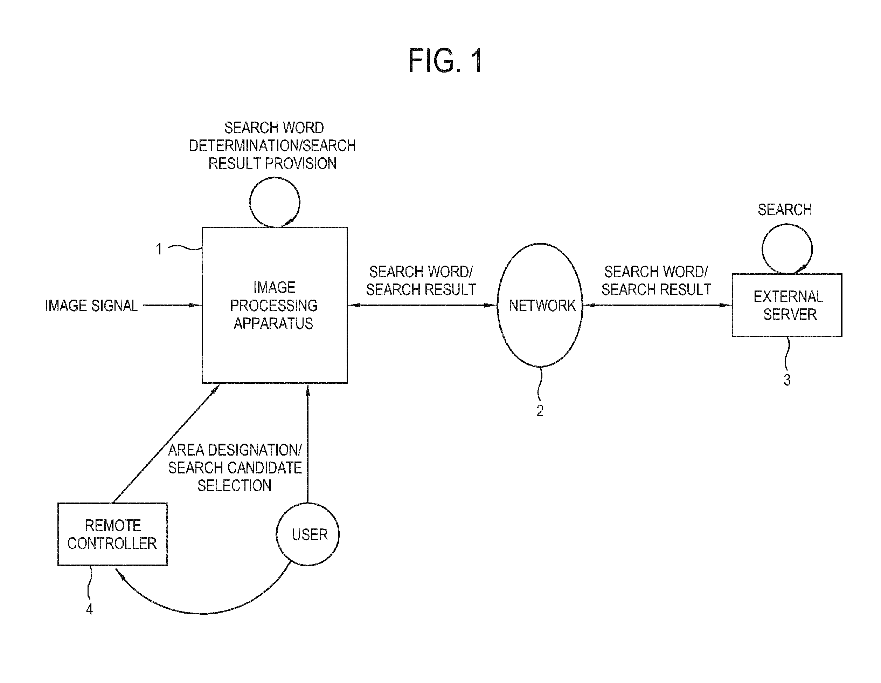

FIG. 1 is a view showing environments in which an image processing apparatus according to an exemplary embodiment of the present invention is applied. An image processing apparatus 1 may be implemented as a TV, a set-top box for a TV, and so on. The image processing apparatus 1 receives an image signal having a particular content and displays an image of the received contents. Character information is included with the received contents. The character information is displayed with the image of the contents. The character information is not particularly limited, but may or may not be involved with the contents. A user may search the displayed character information (hereinafter, sometimes referred to as a 'search word') in viewing the contents through the image processing apparatus 1. The image processing apparatus 1 determines which search word a user is attempting to search. In this case, the image processing apparatus 1 determines the search word by designating an area on the displayed image. Further, the image processing apparatus 1 may provide the user with a candidate search word (hereinafter referred to as a 'candidate search word') to determine the search word to be searched.

The image processing apparatus 1 searches the determined search word and provides the user with a result of the search. The search of the search word may be performed either directly by the image processing apparatus 1 or by using a search result from an external server 3 connected to the image processing apparatus 1, via a network 2.

In this manner, since the image processing apparatus 1 according to the exemplary embodiment of the present invention determines the search word to be searched by the user who designates an area on the displayed image, it is more convenient for the user to use the search of the displayed character information.

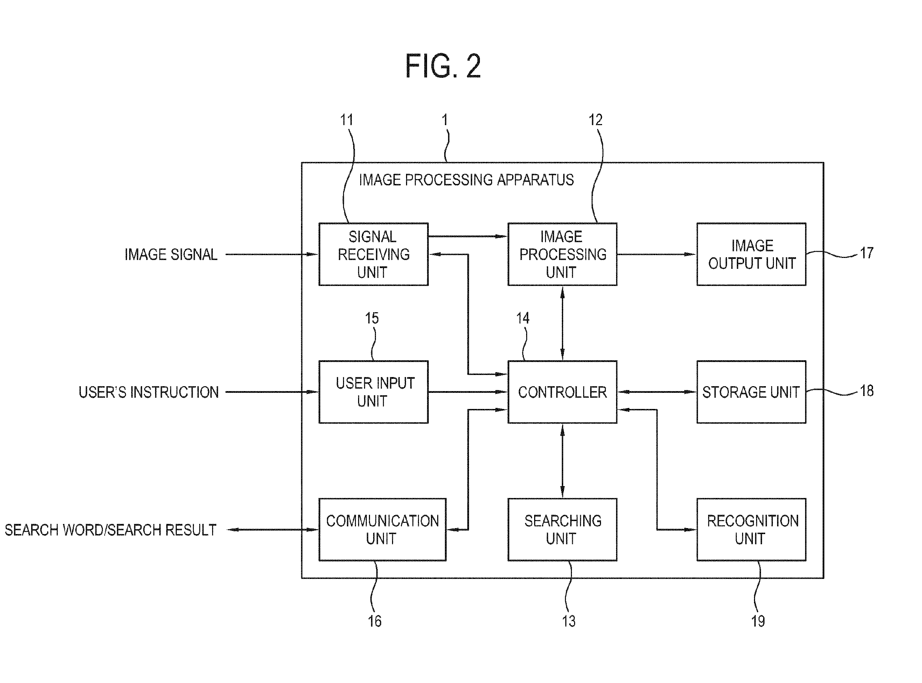

FIG. 2 is a block diagram showing configuration of the image processing apparatus 1 shown in FIG. 1. As shown in FIG. 1, the image processing apparatus 1 includes a signal receiving unit 11, an image processing unit 12, a searching unit 13 and a controller 14.

The signal receiving unit 11 receives an image signal of contents which include the character information. The image signal may be a signal which is received via TV broadcast, input from an image apparatus (not shown) such as a DVD or the like, received via a network such as the Internet or the like, received from a mobile device (not shown) such as a smart phone or the like, or stored in a USB or other memory (not shown).

The image processing unit 12 processes the image signal received by the signal receiving unit 11 so that an image of the contents included in the image signal can be displayed. Examples of image processes performed by the image processing unit 12 may include decoding and so on. The image processing apparatus 1 further includes an image output unit 17 which outputs the contents image obtained through the process of the image processing unit 12. In response to the image processing apparatus 1 being implemented by a TV, the image output unit 17 includes a display unit which displays the contents image directly. In response to the image processing apparatus 1 being implemented with a set-top box for TV, the image output unit 17 transmits an image signal including the contents image to a TV (not shown), so that the contents image can be displayed on the TV.

The searching unit 13 searches a search word which corresponds to the character information included with the image. The searching unit 13 includes a so-called search engine implemented with a computer program to conduct a search of a search word. The search engine may use a search database (DB) composed of data to which the search of the search word makes reference. The image processing apparatus 1 may further include a storage unit 18 which is a nonvolatile memory provided with the search DB. As an alternative, the searching unit 13 may request a search of a search word via a network 2 from the external server 3 and receive a result of the search from the external server 3. In this case, the image processing apparatus 1 may further include a communication unit 16 which communicates with the external server 3 via the network 2.

The controller 14 controls the overall operation of the image processing apparatus 1. The controller 14 controls the signal receiving unit 11 and the image processing unit 12 to respectively receive and process the image signal of the contents including the character information, so that the contents image can be displayed. In response to there being a search request from a user who is viewing the contents, the controller 14 determines a search word to be searched. The image processing apparatus 1 further includes a user input unit 15 which receives an instruction from the user. The controller 14 allows the user to designate an area where the search word is in the displayed image. The controller 14 determines the search word to be searched in the designated area. The controller 14 controls the searching unit 13 to perform a search for the determined search word and provide the user with a result of the search for the search word. The result of the search for the search word may include at least one of a broadcast program, video contents, audio contents, data information and an application program.

Although not shown, the controller 14 may include a nonvolatile memory in which control programs are stored for enabling the above-described control operation; A volatile memory into which at least some of the stored control programs are loaded, and a microprocessor which executes the loaded control programs. Like the controller 14, the searching unit 13 may also include a search program, memories and a microprocessor. Further, the searching unit 13 and the controller 14 may be integrated within a single unit.

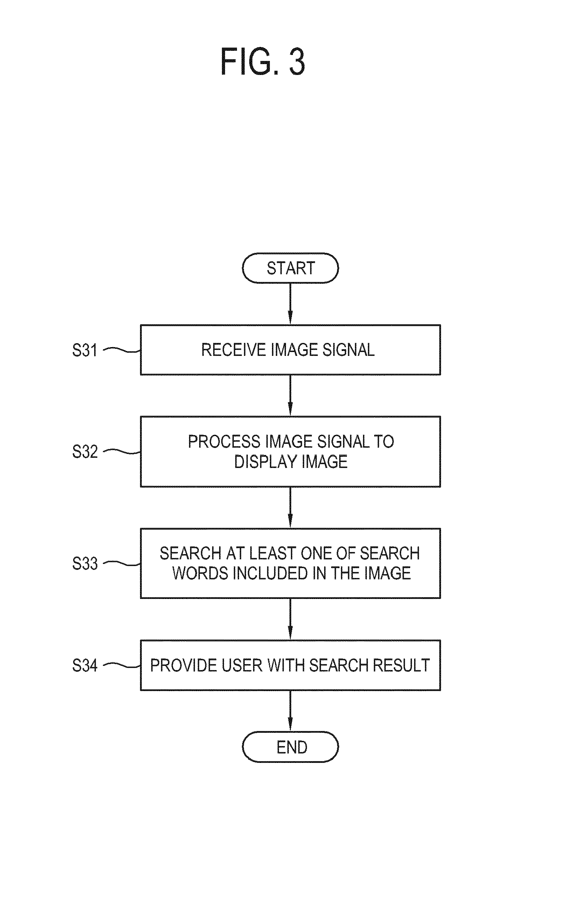

FIG. 3 is a flow chart showing a control method of the image processing apparatus 1 shown in FIG. 1. In operation S31, the image processing apparatus 1 receives an image signal of contents which includes character information. In operation S32, the image processing apparatus 1 processes the image signal for displaying an image of the contents can be displayed. In operation S33, the image processing apparatus 1 searches a search word which corresponds to the character information included in the displayed image.

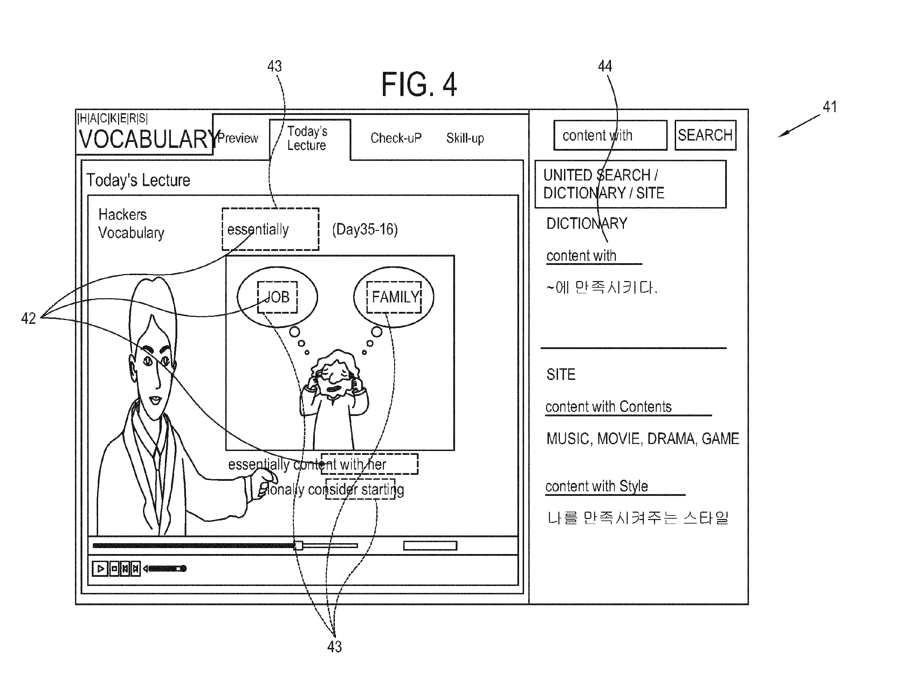

FIG. 4 shows the displayed contents image and an example of displayed character information. In FIG. 4, reference numerals 41 and 42 respectively denote a displayed contents image and character information included in the image. The image processing apparatus 1 allows a user to designate an area 43 in the image 41 to specify a portion including character information (that is, a search word 42) to be searched in the image 41. In this case, the image processing apparatus 1 may provide a user interface (UI) to allow the user to designate the area 43. The user may use a remote controller 4 (see FIG. 1) or the like, to designate the area 43 with a figure such as a quadrangle or the like in such a manner that the search word 42 to be searched in the image 41 is included in the area 43. The image processing apparatus 1 determines the character information 42 included in the designated area 43 to be a search word.

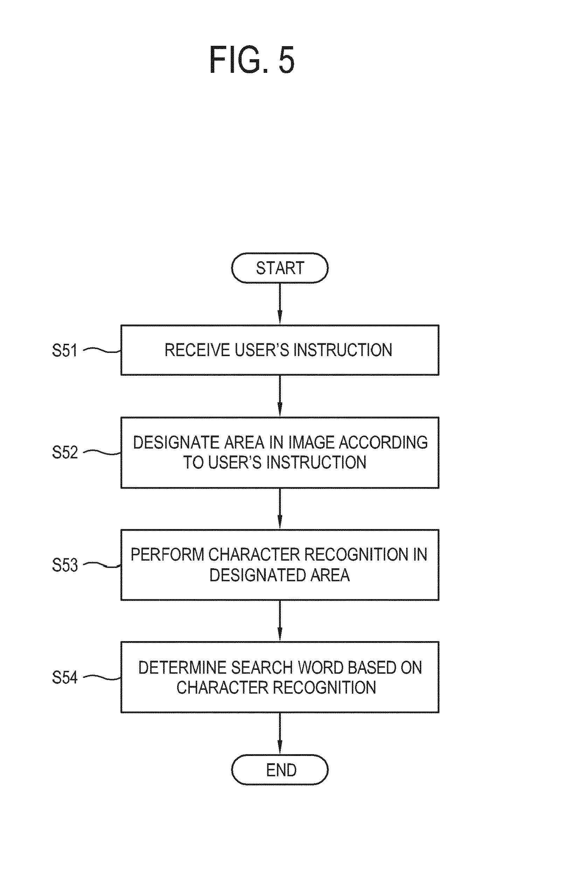

FIG. 5 is a flow chart showing an example of a search word determining process of the image processing apparatus 1. In operation S51, the image processing apparatus 1 receives a user instruction for designation of the area 43 as an area for searching characters. In operation S52, the image processing apparatus 1 designates the area 43 in the image 41 according to the user instruction. In operation S53_{,} the image processing apparatus 1 performs character recognition for the characters in the designated area 43. To this end, the image processing apparatus 1 may further include a recognition unit (19 in FIG. 2) which performs the character recognition. Next, in operation S54, the image processing apparatus 1 determines the search word 42 to be searched based on a result of the character recognition. Thus, the designation of the area 43 to be character-recognized helps to increase the accuracy of determination of the search word 42 and minimize a process load required for the character recognition within the designated area 43.

Referring to FIG. 3 again, in operation S33_{,} the image processing apparatus 1 performs search for the determined search word 42. Next, in operation S34, the image processing apparatus 1 provides the search result (44 in FIG. 4) for the search word 42 to the user.

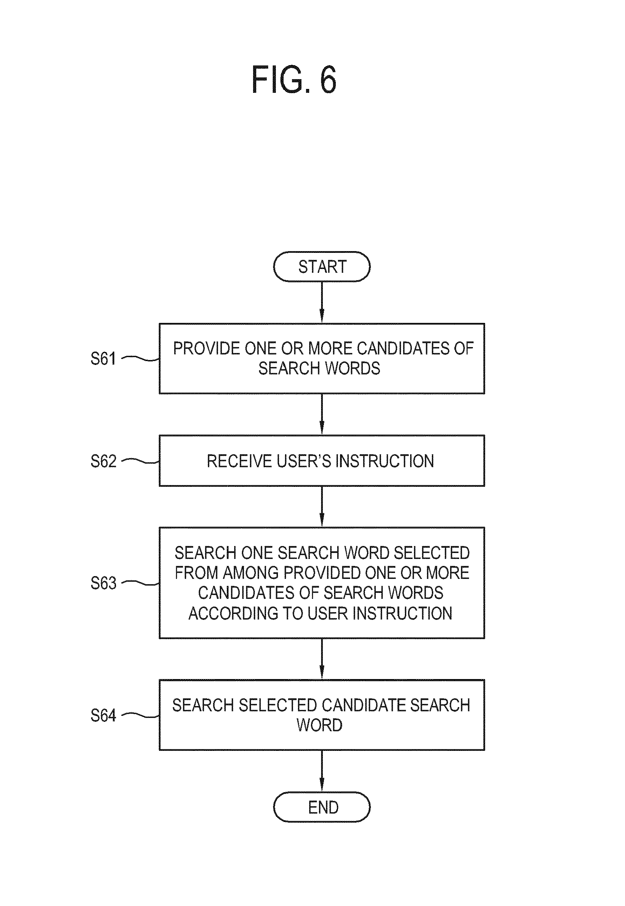

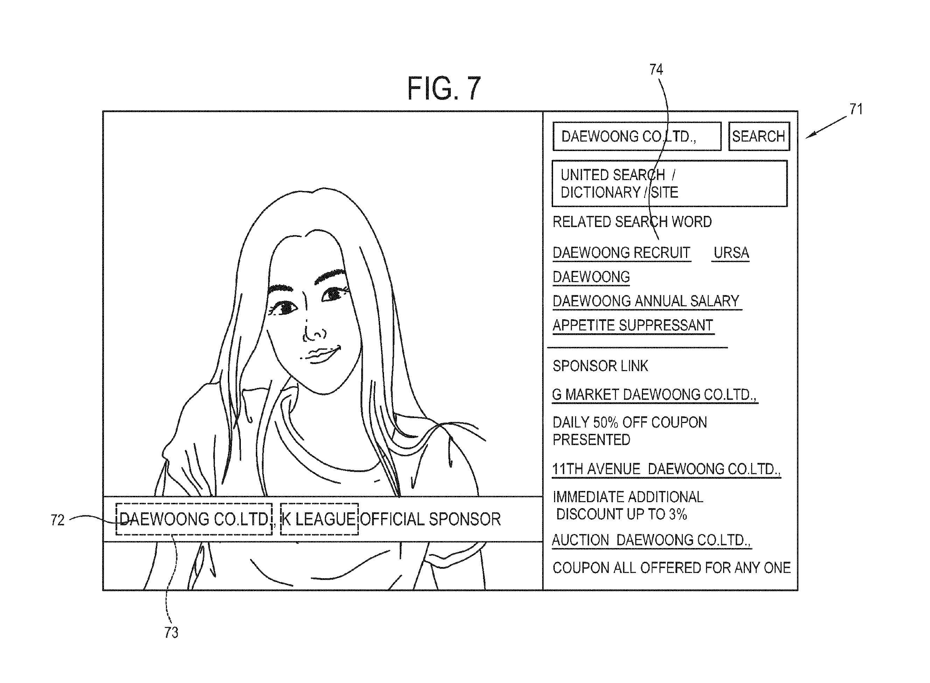

FIG. 6 is a flow chart showing another example of a search word determining process of the image processing apparatus 1. First, in operation S61, the image processing apparatus 1 provides a user with candidate search words to be searched. The image processing apparatus 1 may provide the user with search words included in areas designated by the user as the candidate search words, such as in the example of FIG. 5. FIG. 7 shows an image provided with candidate search words according to this exemplary embodiment. In FIG. 7, reference numerals 71, 72 and 73 denote a displayed contents image, a search word and an area designated by the user, respectively. The image processing apparatus 1 may display candidate search words 74 in response to the search word 72 in the designated area 73. The candidate search words 74 may be provided by referring to a search DB provided in the image processing apparatus 1 or by using an external server 3.

Next, in operation S62, the image processing apparatus 1 receives a user instruction including a selection of a search word. In the example of FIG. 7, the image processing apparatus 1 may provide a UI to allow the user to select one of the plurality of candidate search words 74. Next, in operation S63, the image processing apparatus 1 may select one of the plurality of candidate search words 74 as a search word to be searched based upon the user instruction. Next, in operation S64, the image processing apparatus 1 performs a search for the selected candidate search word. Thus, the image processing apparatus 1 can improve an accurate search by providing the user with the candidate search words and allowing the user to check the candidate search words and select a search word before performing the search.

Although a few exemplary embodiments have been shown and described, it will be appreciated by those skilled in the art that changes may be made in these exemplary embodiments without departing from the invention, the scope of which is defined in the appended claims.

## Claims

1. An image processing apparatus comprising:
a signal receiving unit which receives an image signal;
an image processing unit which processes the received image signal for displaying an image based on the processed image signal;
a searching unit which searches search words included with the image; and
a controller which controls the searching unit to search at least one of the search words included in the displayed image and provide a user with a result of the search for the search word.

2. The image processing apparatus according to claim 1, further comprising a recognition unit which performs character recognition of a designated area within the image,
wherein the controller determines the search word based on a result of the character recognition.

3. The image processing apparatus according to claim 2, further comprising a user input unit which receives a user instruction,
wherein the controller designates an area in the image according to the user instruction and controls the recognition unit to perform the character recognition in the designated area.

4. The image processing apparatus according to one of claims 1 to 3, further comprising a user input unit which receives a user instruction,
wherein the controller provides one or more candidate search words and controls the searching according to a user instruction, unit to search one search word selected from among the provided one or more candidates of search words.

5. The image processing apparatus according to one of claims 1 to 4, wherein the result of the search for the search word comprises at least one of a broadcast program, video contents, audio contents, data information and an application program.

6. A control method of an image processing apparatus, comprising:
receiving an image signal;
processing the received image signal for displaying an image based on the image signal;
searching at least one of plural search words included in the displayed image;
and
providing a user with a result of the search of the search word.

7. The control method according to claim 6, wherein the searching comprises:
performing character recognition of a designated area of the image; and
determining the search word based on a result of the character recognition.

8. The control method according to claim 7, wherein the performing character recognition comprises:
receiving a user instruction;
designating an area in the image according to the user instruction; and
performing the character recognition in the designated area of the image.

9. The control method according to one of claims 6 to 8, wherein the searching comprises:
providing one or more candidates of search words;
receiving a user instruction; and
searching, according to the user instruction, one selected from among the provided one or more candidates of search words.

10. The control method according to one of claims 6 to 9, wherein the result of the search for the search word comprises at least one of a broadcast program, video contents, audio contents, data information and an application program.
